# EUROPÄISCHE PATENTSCHRIFT

(11) **EP 2 821 203 B1**
(45) Veröffentlichungstag und Bekanntmachung des Hinweises auf die Patenterteilung: **10.02.2016**
(21) Anmeldenummer: 13175103.4
(22) Anmeldetag: 04.07.2013
(51) Int. Cl.: B29C 45/14, B29C 45/16, B65D 8/00

(54) **Verfahren und Spritzgussform zur Fertigung eines Einlegeteiles mit einem Kunststoffkragen**
Method and injection mould for producing an insertion part with a plastic collar
Procédé et moule de moulage par injection pour la fabrication d'une pièce d'insertion avec un col en matière synthétique

(43) Veröffentlichungstag der Anmeldung: 07.01.2015
(73) Patentinhaber: Fostag Formenbau AG, 8260 Stein am Rhein (CH)
(72) Erfinder: Mühlemann, Rolf, 8255 Schlattingen (CH)
(74) Vertreter: Feldmann, Clarence Paul

(56) Entgegenhaltungen:
- WO-A1-2009/019728
- JP-A- 2005 280 227
- US-A- 3 787 547
- US-A- 4 844 270
- US-A- 6 004 497
- US-A1- 2007 057 401
- US-A1- 2008 173 652
- US-A1- 2009 250 372
- US-A1- 2012 125 989

## Beschreibung

Die vorliegende Erfindung betrifft ein Verfahren zur Fertigung eines Einlegeteiles mit einem senkrecht zur Mittenachse des Einlegeteiles verlaufenden Rand, an dem ein Kragen aus Kunststoff mittels einer Spritzgussform anzubringen ist, bestehend aus mindestens einer oberen und einer unteren Platte mit beweglichen Mitteln.

Bei Einwegbehältnissen, wie Becher oder Schalen, ist man aus ökonomischen und ökologischen Gründen bestrebt, diese Behältnisse möglichst dünnwandig zu gestalten. Sind diese Behältnisse besonders dünnwandig gestaltet, so weisen sie nur eine geringe Formstabilität auf. Diese Formstabilität wird zumeist damit realisiert, dass insbesondere bei Bechern oder Schalen aus Kunststoff der obere Rand verdickt oder umgebördelt gestaltet ist. Werden solche Behältnisse aus einem Folienmaterial tiefgezogen hergestellt, so ist eine solche Umbördelung oder Verdickung praktisch nicht realisierbar.

Wird in einem Einwegkunststoffbecher ein heisses Getränk abgefüllt, so ist es für den Benutzer kaum möglich diesen zu halten, ohne sich dabei die Finger zu verbrennen. Hinzu kommt, dass durch die erhöhte Temperatur die Formbeständigkeit des Bechers nochmals reduziert wird.

Entsprechend werden auch Einwegbecher aus geschäumtem Kunststoff hergestellt, insbesondere aus geschäumtem Polystyrol, die entsprechend eine hohe isolierende Wirkung aufweisen. Bei diesen Bechern ist hingegen das Problem, dass diese geschäumten Becher von vielen Benutzern als unangenehm empfunden werden und zudem der Becherrand nicht ausserordentlich formfest ist und entsprechend kleine Teile des Schaumstoffes ausbrechen und vom Benutzer mitgetrunken werden. Auch ist die Haltefestigkeit eines auf einen solchen Becher aufgedrückten Deckels aus anderem Material ungenügend.

In der Lebensmittelindustrie werden diverse Produkte in Schalen aus Kunststoff abgefüllt. Da diese Produkte oft zur Oxidation neigen, genügt es nicht einfach einen Deckel darauf aufzudrücken. Stattdessen wird auf das Produkt zumeist eine Folie aus Aluminium aufgedruckt und darüber dann der Deckel angebracht. Da die Aluminiumfolie zwar mit einem geringen Übermass exakt auf das in der Schale abgefüllte Lebensmittel aufgelegt wird, ist dies natürlich keine vollkommene Dichtung. Ebenso stellt der auf die Schale aufgedrückte Kunststoffdeckel keinen luftdichten Abschluss her. Ein solcher luftdichter Abschluss liesse sich mit einer entsprechend gewählten, aufgeschweissten oder mit dem Becher beziehungsweise der Schale versiegelten Folie realisieren. Da aber solche Schalen sehr dünnwandig sind, eignen sie sich nicht für eine Schweissverbindung und auch sonstige thermische Versiegelungen lassen sich zumeist nicht realisieren, da die Schalen aus einem speziell gewählten Kunststoff mit einer UV-strahlensperrenden Schicht sind und sich daher für eine Schweiss- oder Versiegelungsverbindung nicht eignen.

An sich ist diese Problematik längstens bekannt, und es sind auch schon öfters Vorschläge unterbreitet worden, um solche Behältnisse nachträglich mit einem speziellen Kragen zu versehen, der aus einem anderen Kunststoff gefertigt ist der eine wesentlich höhere Festigkeit besitzt als das Material aus dem solche Einwegbecher oder -schalen gefertigt sind. Bei den meisten Lösungen geht man davon aus, den Becher oder die Schale als Endprodukt anzusehen und einen an dem Rand dieser Schale befestigbaren, gesonderten Kunststoffteil zu fertigen, worauf dann die beiden Teile mechanisch zusammengefügt und eventuell noch zusätzlich geschweisst oder verklebt werden. Eine entsprechende Lösung ist beispielsweise aus der FR-2175094 A bekannt. Ferner zeigt die US 2012/0318858 einen Papierbecher, der formschlüssig in ein Kunststoffteil einschiebbar ist, der einen Kunststoffkragen mit einer becherförmigen, auf der unteren Seite offenen Anteil aufweist, wobei diese Becherwand mehrere bis annähernd zum Kragen hinauf verlaufende Schlitze aufweist, um so einen nicht direkt am Pappbecher anliegenden Haltebereich zu bilden.

In ähnlicher Weise wird in der EP 0453754 A2 ein Behälter vorgeschlagen, insbesondere ein Trinkbecher, mit einem vorzugsweise aus Kunststoff, Pappe oder dergleichen bestehenden Behälterkörper, der einen oberen, umlaufenden Rand zur Bildung einer Öffnung aufweist, wobei diesem oberen Rand ein umlaufender Kragen aus einem kompakten Material zugeordnet wird.

Weiterer artverwandter Stand der Technik US2012/0125989, US 2008/0173652 und US2009/0250372.

Aus dem Stand der Technik ist nach diesseitigem Wissen kein Behälter mit umlaufendem Rand bekannt, der als Einlegeteil in einer Spritzgussform eingelegt wird und an dem direkt ein umlaufender Kunststoffkragen angespritzt wird.

Dies ist auch aus technischen Gründen relativ komplex. Solche Einlageteile sind durch ihre Dünnwandigkeit relativ instabil und sehr leicht. Es ist daher äusserst komplex ein solches Einlegeteil in einer Spritzgussform so zu halten, dass der Rand des Behälters von allen drei Seiten umspritzt werden kann.

Diese Aufgabe löst ein Verfahren der eingangs genannten Art mit den Schritten a) bis e) gemäss dem kennzeichnenden Teil des Patentanspruches 1. Hierbei wird bei diesem Verfahren von der Erkenntnis ausgegangen, dass beim Spritzvorgang erst am unteren Teil des Randes des Einlegeteiles Stege angespritzt werden, während der Becher an der oberen Spritzgussformenplatte angedrückt wird, und diese noch plastischen Stege nun bereits genügend Tragkraft haben, um den äusserst leichten Einlegeteil in der Position zu halten, auch wenn ein entsprechender Teil einer solchen Spritzgussform den umlaufenden Rand nicht mehr stützt und anschliessend der Kragen allseitig umspritzt werden kann. Entsprechend können die einzelnen Injektionsschritte in zeitlicher Überlappung erfolgen. Es ist ferner die Aufgabe der vorliegenden Erfindung eine Spritzgussform vorzuschlagen, die zur Durchführung des erfindungsgemässen Verfahrens geeignet ist. Eine solche Spritzgussform geht aus dem Anspruch 5 und den weiteren sich darauf zurückbeziehenden Ansprüchen hervor.

Wenn im vorliegenden Fall von einem Einlegeteil gesprochen wird, so handelt es sich hierbei immer um einen ein dünnwandiges, labiles Behältnis mit einem umlaufenden, mindestens annährend senkrecht zur Mittenachse dieses Behältnisses verlaufenden Rand. Hierbei kann das Einlegeteil sowohl aus Papier, Aluminiumfolie oder Pappe oder aus Kunststoff sein, wobei es sich hierbei sowohl um einen tiefgezogenen Behälter aus einer Kunststofffolie handeln kann, wie auch um einen Behälter aus einer entsprechend geformten Aluminiumfolie. Typischerweise sind die Ränder solcher Einlegeteile unstabil und formlich meist relativ ungenau. Es ist der Vorteil der vorliegenden Erfindung, dass solche Einlegeteile zu einem präzisen Behältnis gestaltet werden können, das dann einen stabilen Rand erhält und insgesamt zu einem relativ stabilen Behältnis wird.

In der beiliegenden Zeichnung ist eine bevorzugte Ausführungsform eine zur Durchführung des Verfahrens geeignete Spritzgussform im Teilschnitt, sowie eine symbolische Darstellung zur Erläuterung des erfindungsgemässen Verfahrens dargestellt. Es zeigt:
- Fig. 1: einen Teilschnitt durch die untere Platte einer Spritzgussform in der Position bevor der Einlegeteil eingelegt ist, und
- Fig. 2: dieselbe Ansicht mit eingelegtem Einlageteil;
- Fig. 3: die Situation nach der Durchführung einer ersten Injektion;
- Fig. 4: die Form nach Rückzug der stützenden Hülse unter Weglassung des Einlegeteiles, und
- Fig. 5: die Situation gemäss der Figur 4 mit dem Einlageteil und nach der Durchführung der zweiten Injektion, sowie
- Fig. 6: nochmals dieselbe Ansicht wie in den vorangegangenen Figuren, nach der Durchführung der dritten Injektion.
- Fig. 7: zeigt eine vereinfachte Darstellung der Spritzgussform, wobei hier die Position während der ersten Injektion dargestellt ist, und
- Fig. 8: in der die dritte Injektion durchgeführt worden ist.

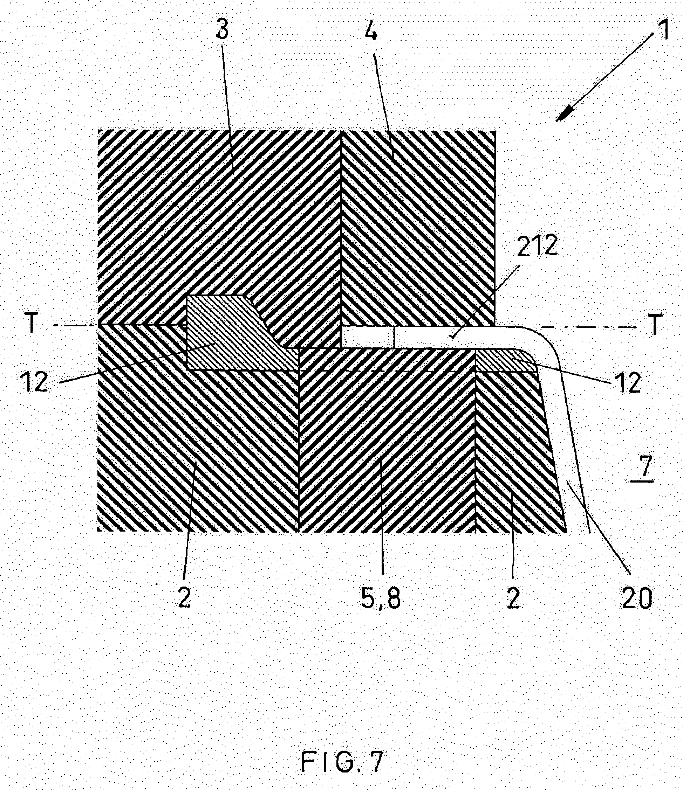

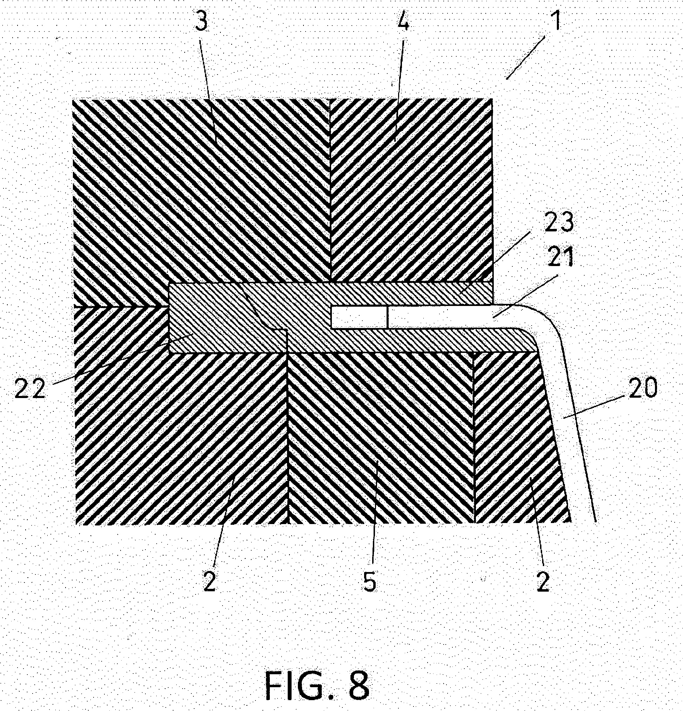

Vorerst wird mit Bezug auf Figuren 7 und 8 erst der Aufbau einer für die Durchführung des erfindungsgemässen Verfahrens geeignete Spritzgussform kurz beschrieben. Die Figuren 7 und 8 zeigen eine vereinfachte Darstellung einer Spritzgussform als Teilschnitt im Bereich in dem ein Einlegeteil mit einem Kragen aus Kunststoff gefertigt wird. Die Spritzgussform ist insgesamt mit 1 bezeichnet. Sie besteht üblicherweise aus zwei Platten, nämlich eine unteren Platte 2 und einer oberen Platte 3. In der oberen Platte 3 ist ein Schieber 4 ersichtlich. In der unteren Platte 2 ist ebenfalls ein Schieber 5 im Schnitt dargestellt. In der unteren Platte 2 ist mindestens eine Aufnahmekavität 7 vorhanden, indem ein Einlegeteil 20 Aufnahme findet. Dieses Einlegeteil lässt sich in die Aufnahmekavität 7 einsetzen, wenn die obere Platte 3 mit dem Schieber 4 genügend weit angehoben ist. Bei einer Spritzgussform mit einer einzigen Aufnahmekavität wird man das Einlegeteil 20 aus Kostengründen von Hand einlegen. Bei grösseren Spritzgussformen 1 mit einer Vielzahl von Aufnahmekavitäten 7 wird man die Einlegeteile 20 mit einem Handling-Roboter einsetzen. Solche Vorrichtungen bzw. Handling-Roboter, mit denen Einlegeteile in Spritzgussformen eingebracht werden, sind hinreichend bekannt, und entsprechend kann auch deren Darstellung und Beschreibung verzichtet werden. Auch sind im vorliegenden Fall sämtliche Kühlkanäle, Heisskanäle und Injektionseinheiten weggelassen, genauso wie die verschiedenen mechanischen Teile, um die Schieber zu betätigen, bzw. die obere und die untere Platte 3, 2 zu bewegen. Ohnehin wird man meist nur die obere Platte bewegen, während die untere Platte ortsfest bleibt.

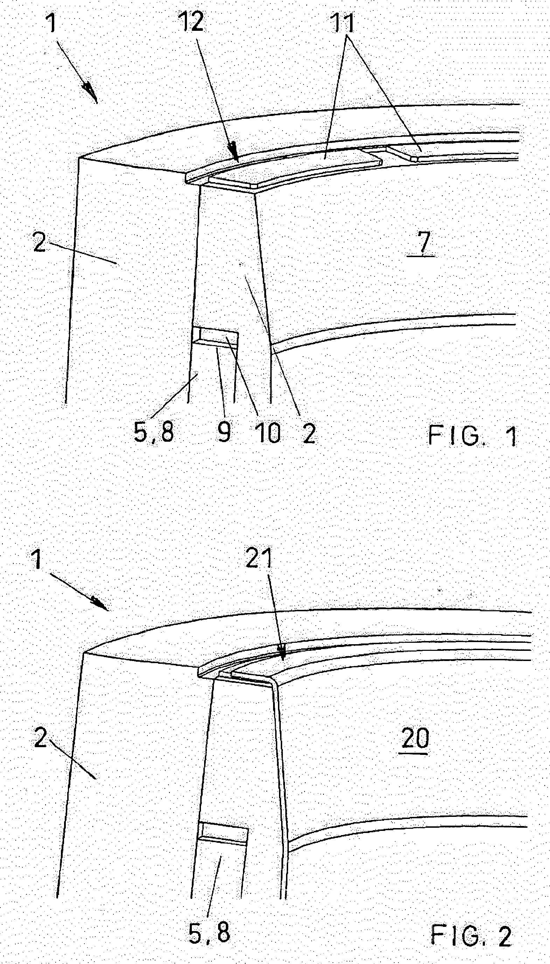

Zur Erläuterung des erfindungsgemässen Verfahrens wird nun auf die Figur 1 verwiesen. In der Figur 1 ist die untere Platte 2 in kleinerem Massstab als in den Figuren 7 und 8, wiederum in einem Teilschnitt, dargestellt. In diesem Schnitt erkennt man den Schieber 5 der bevorzugterweise aus einer zylindrischen Hülse besteht, die mit 8 bezeichnet ist und deren oberes Ende 9 Schlitze aufweist, so, dass die zylindrische Hülse 8 oberhalb des geschlossenen Endes 9 in axialer Richtung verlaufende Stifte 10 bilden, deren obere Enden aus der unteren Platte 2 hinausschiebbar sind. In der hier dargestellten Lage ist dieser Schieber 5 in seiner oberen Position, bei der Auflageplättchen 11, welche die oberen Enden der Stifte 10 sind, aus der unteren Platte nach oben in die Aufnahmekavität hineinreichen. Die untere Platte 2 der Spritzgussform weist entsprechende Kanäle auf, in denen diese Stifte 10 verschieblich bewegbar sind. Zwischen den einzelnen Stiften 10 ist die Platte 2 durchgehend.

In der Position, wie in Figur 1 dargestellt, ist der Schieber 5 in einer oberen Position. Die Stifte 10 ragen nun mit deren oberen Enden, welche die Auflageplättchen 11 bilden, aus der unteren Platte 2 heraus, jedoch unterhalb der Trennebene T. Als Trennebene wird jene Ebene bezeichnet, welche die Schliessfläche der Spritzguss 1 bildet, wenn die Unterplatte 2 und die Oberplatte 3 in der Spritzlage dichtend aufeinander liegen. In dieser Lage verbleibt neben der Aufnahmekavität 7 ein Hohlraum 12 in dem Material für die erste, durchzuführende Injektion des zu bildenden Kragens am Einlegeteil Platz findet. Dieser Hohlraum ist in der Figur 1 sowie in der Figur 7 deutlich erkennbar. Der Hohlraum 12 erstreckt sich von einem Randbereich zwischen den Auflageplättchen 11 hindurch bis annähernd zum inneren Rand der Aufnahmekavität 7.

Die Figur 2 zeigt dieselbe Teilansicht der Spritzgussform 1 wie in der Figur 1, wobei hier jedoch das Einlegeteil 20 bereits in der Aufnahmekavität 7 liegt. Der peripher nach aussen geformte Rand 21 des Einlegeteiles 20 ruht, wie hier dargestellt, auf dem Rand des Hohlraumes 12 für den zu bildenden Kragen. Wenn die zylindrische Hülse 8 des Schiebers 5 sich in der unteren Position befindet, liegt der Rand 21 des Einlegeteiles 20 auf der unteren Platte 2 auf, falls der Schieber 5 bzw. die zylindrische Hülse 8 sich in der oberen Position befindet, auf den Auflageplättchen 11. Sobald der Einlegeteil 20 in die Aufnahmekavität 7 eingelegt ist, schliesst die Spritzgussform 1 und die untere und obere Platte 2, 3 liegen in der Trennebene T direkt aufeinander. Der Rand 21 wird nun zwischen den beiden Schiebern 4, 5 klemmend gehalten. Das heisst, der Schieber 4 in der oberen Platte 3 drückt auf den Rand 21, während der Schieber 5 bzw. die Auflageplättchen 11 den Rand 21 zum oberen Schieber 4 drückt.

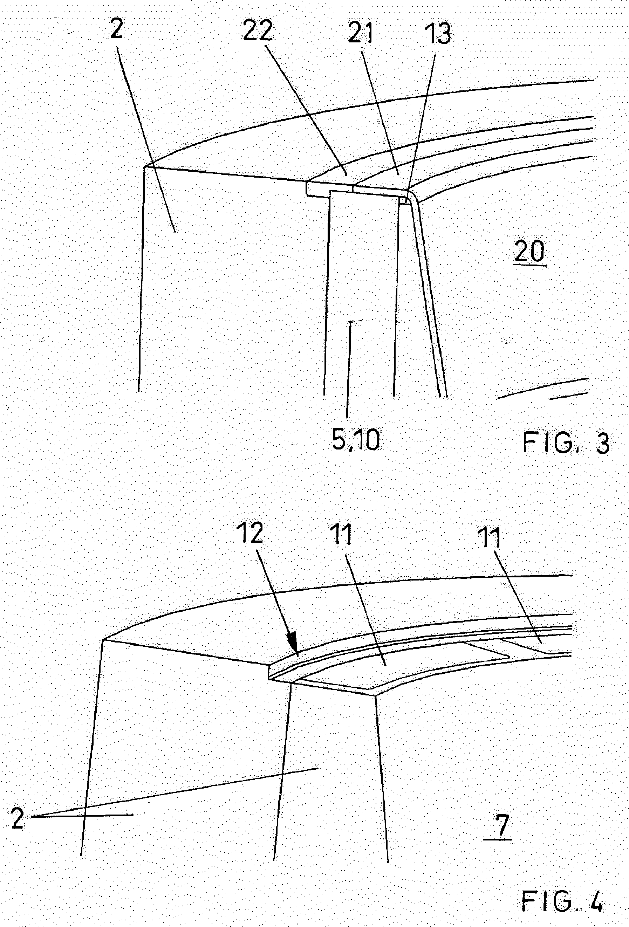

In dieser Position findet nun die erste Injektion von Kunststoff statt. Hierbei bildet sich ein erster Teil des peripheren Bereiches des umlaufenden Kragens sowie Stege aus Kunststoff, die sich von diesem peripheren Bereich des Kragens 22 unterhalb des Randes 21 bis fast zur Seitenwand des Einlegeteiles 20 erstrecken. Dies ist am deutlichsten in der Figur 3 ersichtlich, in der man erkennt, dass nach Durchführung dieser ersten Injektion der periphere Hohlraum 12 bereits gefüllt ist, ebenso wie der zentrische Randbereich 13 des Hohlraumes 12. Nicht ersichtlich ist in dieser Darstellung der gefüllte Bereich der Stege zwischen den benachbarten Auflageplättchen 11, da in dieser Ansicht der Schnitt durch einen Stift 10 der zylindrischen Hülse des Schiebers 5 verläuft.

Ist diese erste Injektion beendet, so wird der Schieber 5 in der unteren Platte 2 abgesenkt und die Auflageplättchen 11, welche im Prinzip die oberen Stirnfläche der Stifte 10 sind, liegen nun plan und fluchtend mit der oberen Fläche der unteren Platte 2 im Bereich des Hohlraumes 12. In dieser in der Figur 4 dargestellten Lage wurde zur Verdeutlichung das Einlegeteil 20 nicht dargestellt und entsprechend ist der Blick frei auf die Aufnahmekavität 7 in der das Einlegeteil 20 an sich ruhen würde.

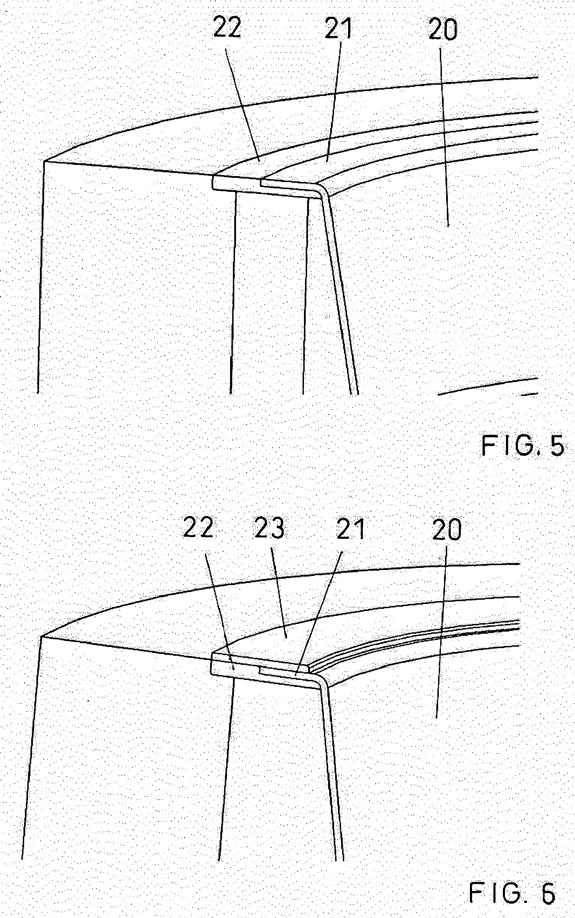

In der Figur 5 ist nun die Lage dargestellt, indem die zweite Injektion abgeschlossen ist. Durch die Absenkung des Schiebers 5 bzw. der zylindrischen Hülse 8 mit den Stiften 10 ist ein zusätzlicher Raum freigegeben, der nun während der zweiten Injektion gefüllt wird. Während dieser Zeit ruht das Einlegeteil 20, das nun in dieser Figur wieder dargestellt ist, anfänglich nur auf den nach der ersten Injektion gebildeten Stegen, während nun in der zweiten Injektion die Zwischenräume zwischen den Stegen, die durch das Absenken der Auflageplättchen 11 freigegeben worden sind, gefüllt werden. Der zu bildende Kragen 22 am Einlegeteil 20 besteht nach dieser zweiten Injektion aus einer vollständig deckenden Fläche unterhalb des Randes 21 des Einlegeteiles 20 und den peripheren Anteil des Kragens 22, der haftend an der peripheren Stirnfläche des Randes 21 des Einlegeteiles anschliesst.

In einem weiteren Schritt, der am deutlichsten aus der Figur 8 ersichtlich ist, wird nun auch der obere Schieber 4 in der oberen Platte 3 angehoben und der umlaufende Kragen 22 wird mit einer dritten Injektion vervollständigt. Bei der dritten Injektion wird nun eine Kunststofflage 23 des Kragens 22 gebildet. Diese obere Kunststofflage 23 kann, wie in der Figur 6 dargestellt, lediglich eine flache Deckschicht sein, die den peripheren Bereich des Kragens 22 sowie den zum Zentrum hin liegenden Teil überdeckt, somit also auch den Rand 21 des Einlegeteiles 20.

Je nach den Bedingungen die das Einlegeteil im fertigen Zustand zu erfüllen hat, wird man den Kunststoff wählen. Hierbei hat man eine grosse Vielzahl von Variationsmöglichkeiten. Im einfachsten Fall wird man die erste, zweite und dritte Injektion alle mit demselben Kunststoff durchführen. Man ist aber durchaus auch frei die erste und zweite Injektion mit demselben Kunststoff durchzuführen, während die dritte Injektion mit einem davon abweichenden Kunststoff durchgeführt wird, der beispielsweise besonderes geeignet ist, um darauf eine Schweissung anzubringen oder einen Kunststoff zu verwenden, der besonders elastische Eigenschaften aufweist um eine möglichst elastische, formschlüssige Verbindung zur Dichtung mit einem aufsetzbaren Deckel erzielen zu können. Prinzipiell können aber alle drei Injektionen auch mit verschiedenen Kunststoffen erfolgen. So kann es unter Umständen sinnvoll sein die zweite Injektion mit einem Kunststoff durchzuführen, der im abgekühlten und erhärteten Zustand eine höhere Festigkeit aufweist als der Kunststoff der bei der ersten Injektion verwendet worden ist. Dies ist besonders sinnvoll, wenn es sich beim Einlegeteil um einen Einlegeteil aus besonders labilem Material handelt, wie beispielsweise Papier oder Pappe. Der angespritzte Kragen verleiht dann dem Einlegeteil eine wesentlich höhere Festigkeit durch seinen rigiden Kragen, der gemäss dem Verfahren der vorliegenden Erfindung gefertigt worden ist.

Auch wenn hier das Verfahren zur Verdeutlichen so beschrieben ist, dass die einzelnen Injektionsschritte jeweils für sich abgeschlossen sind, und dann der nächste Injektionsvorgang erfolgt, können in Tat und Wahrheit jeweils diese Injektionsschritte praktisch ineinander übergehend sein. Dies insbesondere dann, wenn zwei solche Injektionsschritte, die aufeinander folgen, mit demselben Kunststoff erfolgen. Insbesondere kann die zweite Injektion bereits gegen Ende der ersten Injektion erfolgen. Mit anderen Worten, bei der Injektion des ersten Schrittes werden die Stege zwischen den Auflageplättchen 11 sehr schnell gefüllt und erreichen, dank entsprechender Kühlung der Spritzgussform, sehr schnell eine genügende Tragfähigkeit um das sehr leichte Einlegeteil in der Lage zu halten. Nun können bereits vor Ende der ersten Injektion die Auflageplättchen 11 bereits abgesenkt werden und somit auch diese Zwischenräume aufgefüllt werden, mittels der praktisch unterbrechungsfreien ersten und zweiten Injektion.

Wird auch die dritte Injektion mit demselben Kunststoff durchgeführt wie die erste und zweite Injektion, so kann gegen Ende der zweiten Injektion bereits der Schieber 4 in der oberen Platte nach oben gezogen werden und die dritte Injektion einsetzen.

Erfolgen die drei Injektionen alle mit demselben Kunststoff, wo wird man diese Injektionen auch über dieselben Injektionsdüsen durchführen, und in diesem Falle gehen praktisch die einzelnen Injektionen unterbrechungsfrei ineinander über. Die einzelnen Schritte werden in diesem Falle vor allem durch den Bewegungsablauf der beiden Schieber 4 und 5 erfolgen.

Betrachtet man das Verfahren nämlich bezüglich des Bewegungsablaufs der beiden Schieber 4, 5 so wird nach der Einlage des Einlegeteiles 20 in die Aufnahmekavität 7 die Form geschlossen, die beiden Schieber 4 und 5 aufeinander zubewegt und das Einlageteil 20 im Bereich seines Randes 21 geklemmt. Hierauf erfolgt sogleich die erste Injektion und nachdem der Hohlraum 12 teilweise gefüllt ist wird der untere Schieber 5 abgesenkt und weiter injiziert, wobei dies nun die zweite Injektion ist. Sobald diese zweite Injektion weitgehend abgeschlossen ist wird der Schieber 4 in der oberen Platte angehoben und die zweite Injektion geht direkt über in die dritte Injektion.

Wie bereits erwähnt, sind diese ineinander übergehenden Injektionen je nachdem welche Kunststoffkombinationen verwendet werden, nur bedingt möglich oder die einzelnen Schritte müssen tatsächlich in sich abgeschlossen werden.

### Bezugszeichenliste:

- 1: Spritzguss
- 2: untere Platte
- 3: obere Platte
- 4: Schieber in oberer Platte
- 5: Schieber in unterer Platte (zylindrische Hülse)
- 7: Aufnahmekavität für Einlegeteil
- 8: Zylindrische Hülse
- 9: oberes Ende der Hülse
- 10: Stifte
- 11: Auflageplättchen
- 12: Hohlraum für zu bildenden Kragen
- 13: zentrischer Randbereich des Hohlraumes
- 20: Einlegeteil
- 21: Rand des Einlegeteiles
- 22: Kragen am Einlegeteil
- 23: obere Kunststofflage des Kragens

## Patentansprüche

1. Verfahren zur Fertigung eines Einlegeteiles (20) mit einem senkrecht zu einer Mittenachse des Einlegeteiles (20) verlaufenden Rand (21) an dem ein Kragen (22) aus Kunststoff mittels einer Spritzgussform (1) anzubringen ist, wobei die Spritzgussform (1) aus mindestens einer oberen Platte (3) und einer unteren Platte (2) mit beweglichen Mittel (4, 5) besteht, **gekennzeichnet durch** folgende Schritte:
a) Einlegen eines Einlegeteiles (20) in eine Aufnahmekavität (7) einer Spritzgussform (1);
b) erste Injektion von Kunststoff und Bildung von radial nach aussen gerichteten Kunststoffstegen an der Unterseite des Randes (21) des Einlegeteiles (20);
c) Absenkung von einem oder mehreren Mitteln (5), zwischen denen die Kunststoffstege gebildet worden sind, bis deren oberen Flächen, in Form von Auflageplättchen (11), mit der Unterseite der gebildeten Stege fluchten, worauf eine zweite Injektion von Kunststoff erfolgt bis ein umlaufender Kragen (22) auf der Unterseite des Randes (21) des Einlegeteiles (20) gebildet ist;
d) dritte Injektion von Kunststoff zur Bildung einer Deckschicht (23) oben auf dem Rand (21) des Einlegeteiles (20) zur Bildung des vollständigen Kragens (22) am Rand (21) des Einlegeteiles (20);
e) Auswurf des Einlegeteiles (20) mit dem vollständigen Kragen (22).

2. Verfahren nach Anspruch 1, **dadurch gekennzeichnet, dass** die erste, zweite und dritte Injektion alle mit demselben Kunststoff erfolgen.

3. Verfahren nach Anspruch 1, **dadurch gekennzeichnet, dass** die zweite Injektion gegen die zeitliche Endphase der ersten Injektion einsetzt.

4. Verfahren nach Anspruch 1, **dadurch gekennzeichnet, dass** die erste und zweite Injektion mit demselben Kunststoff erfolgen und die dritte Injektion mit einem anderen Kunststoff erfolgt.

5. Spritzgussform (1) zur Fertigung eines Einlegeteiles (20) mit dem Verfahren gemäss Patentanspruch 1, mit einem senkrecht zur Mittenachse des Einlegeteiles (20) verlaufenden Rand (21) an dem ein Kragen (22) aus Kunststoff anzubringen ist, bestehend aus einer unteren Platte (2) und einer oberen Platte (3), **dadurch gekennzeichnet, dass** die untere Platte eine oder mehrere Aufnahmekavitäten (7) aufweist, wobei jede Aufnahmekavität (7) mindestens eine Einlegeteilaufnahme mit planer Stirnfläche umfasst, und Mittel (5) vorhanden sind, auf denen in einer oberen Position das Einlegeteil (20) mit seinem Rand (21) ruht und das Einlegeteil (20) an einen Schieber (4) der oberen Platte (3) zu drücken vermag, und in einer unteren Position des Mittels (5) ein zusätzlicher Raum freigegeben ist so, daß der Rand (21) des Einlegeteiles (20) allseitig umspritzbar ist.

6. Spritzgussform nach Anspruch 5, **dadurch gekennzeichnet, dass** das Mittel (5) ein Schieber in der Form einer zylindrischen Hülse (8) ist, die beweglich in der unteren Platte (2) lagert.

7. Spritzgussform nach Anspruch 6, **dadurch gekennzeichnet, dass** an die zylindrische Hülse (8) an deren oberen Ende (9) Stifte (10) angeformt sind, deren Enden Auflageplättchen (11) bilden, wobei jeweils benachbarte Auflageplättchen (11) zur Bildung von Kunststoffstegen distanziert sind.

8. Spritzgussform nach Anspruch 5, **dadurch gekennzeichnet, dass** in der unteren Platte (2) am oberen Rand jeder Aufnahmekavität (7) ein Hohlraum (12) eingeformt ist, der die Höhe, Breite und Form des zu bildenden Kragens (22) am Rand (21) des Einlegeteiles (20) bestimmt.

9. Spritzgussform nach Anspruch 5, **dadurch gekennzeichnet, dass** in der oberen Platte (2) ein Schieber (4) vorhanden ist, wobei der Rand (21) des Einlegeteiles (20) zwischen den beiden Schiebern (4, 5) klemmend haltbar ist, während eine erste Injektion erfolgt.

10. Spritzgussform nach Anspruch 6, **dadurch gekennzeichnet, dass** der Verschiebeweg des Schiebers (4) in der oberen Platte (3) der Dicke der Kunststofflage des Kragens (22) über dem Rand (21) des Einlegteiles entspricht.

11. Spritzgussform nach Anspruch 5, **dadurch gekennzeichnet, dass** pro zu verwendenden, unterschiedlichen Kunststoff zur Bildung des Kragens (22) mindestens je eine Injektionsdüse vorgesehen ist.

## Claims

1. A method for producing an insert part (20) with an edge (21) running perpendicular to the central axis of the insert part (20), at which edge a collar (22) made of plastic is to be provided by means of an injection mould (1), wherein the injection mould (1) comprises at least one upper plate (3) and one lower plate (2) with mobile means (4, 5), **characterised by** the following steps:
a) insertion of an insert part (20) into a receptacle cavity (7) of an injection mould (1);
b) first injection of plastic and formation of radially outwardly directed plastic webs at the underside of the edge (21) of the insert part (20) ;
c) lowering of one or more means (5), between which the plastic webs have been formed, until their upper faces, in the form of support platelets (11), are flush with the underside of the formed webs, after which a second injection of plastic takes place until a circumferential collar (22) is formed on the underside of the edge (21) of the insert part (20);
d) third injection of plastic for the formation of a top layer (23) on top of the edge (21) of the insert part (20) for the formation of the complete collar (22) at the edge (21) of the insert part (20);
e) ejection of the insert part (20) with the complete collar (22).

2. The method according to claim 1, **characterised in that** the first, second and third injection all take place with the same plastic.

3. The method according to claim 1, **characterised in that** the second injection starts towards the chronological end phase of the first injection.

4. The method according to claim 1, **characterised in that** the first and second injection take place with the same plastic and the third injection takes place with another plastic.

5. An injection mould (1) for producing an insert part (20) with the method according to claim 1, with an edge (21) running perpendicular to the central axis of the insert part (20), at which edge a collar (22) made of plastic is to be provided, comprising a lower plate (2) and an upper plate (3), **characterised in that** the lower plate comprises one or more receptacle cavities (7), wherein each receptacle cavity (7) comprises at least one insert-part receptacle with a plane end face, and means (5) are present on which, in an upper position, the insert part (20) rests with its edge (21) and the insert part (20) is able to press on a slide (4) of the upper plate (3), and in a lower position of the means (5) an additional space is freed such that the edge (21) of the insert part (20) can be overmoulded all around.

6. The injection mould according to claim 5, **characterised in that** the means (5) is a slide in the form of a cylindrical sleeve (8), which is mounted mobile in the lower plate (2).

7. The injection mould according to claim 6, **characterised in that** pins (10) are formed on the cylindrical sleeve (8) at its upper end (9), the ends of which pins form support platelets (11), wherein adjacent support platelets (11) are each spaced apart for the formation of plastic webs.

8. The injection mould according to claim 5, **characterised in that** there is formed in the lower plate (2), at the upper edge of each receptacle cavity (7), a cavity (12) which determines the height, width and shape of the collar (22) that is to be formed at the edge (21) of the insert part (20).

9. The injection mould according to claim 5, **characterised in that** a slide (4) is present in the upper plate (2), wherein the edge (21) of the insert part (20) can be held in a clamped manner between the two slides (4, 5) while the first injection is taking place.

10. The injection mould according to claim 6, **characterised in that** the displacement path of the slide (4) in the upper plate (3) corresponds to the thickness of the plastic layer of the collar (22) over the edge (21) of the insert part.

11. The injection mould according to claim 5, **characterised in that** at least one injection nozzle is provided for each different plastic to be used for the formation of the collar (22).

## Revendications

1. Procédé de fabrication d'une pièce d'insertion (20) comprenant un bord (21) vertical à un axe médian de la pièce d'insertion (20) sur lequel un col (22) en plastique doit être posé au moyen d'un moule d'injection (1), sachant que le moule d'injection (1) est composé au moins d'une plaque supérieure (3) et d'une plaque inférieure (2) avec des moyens mobiles (4, 5), **caractérisé par** les étapes suivantes :
a) encastrement d'une pièce d'insertion (20) dans une cavité de réception (7) d'un moule d'injection (1) ;
b) première injection de plastique et formation de traverses en plastique dirigées radialement vers l'extérieur sur la sous-face du bord (21) de la pièce d'insertion (20) ;
c) abaissement d'un ou plusieurs moyen(s) (5) entre lesquels les traverses en plastique sont formées, jusqu'à leur faces supérieures, sous forme de plaquettes de pose (11) affleurant avec la sous-face des branches formées, sur quoi a lieu une deuxième injection de plastique jusqu'à ce qu'un col périphérique (22) soit formé sur la sous-face du bord (21) de la pièce d'insertion (20) ;
d) troisième injection de plastique pour former une couche de couverture (23) sur le dessus du bord (21) de la pièce d'insertion (20) pour former le col (22) complet sur le bord (21) de la pièce d'insertion (20) ;
e) éjection de la pièce d'insertion (20) avec le col complet (22).

2. Procédé selon la revendication 1, **caractérisé en ce que** la première, la deuxième et la troisième injection sont toutes effectuées avec le même plastique.

3. Procédé selon la revendication 1, **caractérisé en ce que** la deuxième injection agit contre la phase finale temporelle de la première injection.

4. Procédé selon la revendication 1, **caractérisé en ce que** la première et la deuxième injection sont effectuées avec le même plastique et la troisième injection est effectuée avec un autre plastique.

5. Moule d'injection (1) pour fabriquer une pièce d'insertion (20) avec le procédé selon la revendication 1, comprenant un bord (21) vertical à l'axe médian de la pièce d'insertion (20) sur lequel un col (22) en plastique doit être posé, composé au moins d'une plaque inférieure (2) et d'une plaque supérieure (3), **caractérisé en ce que** la plaque inférieure présente une ou plusieurs cavité(s) de réception (7), sachant que chaque cavité de réception (7) comprend au moins une réception de pièce d'insertion avec une face avant plane, et des moyens (5) sont présents sur lesquels, dans une position supérieure, la pièce d'insertion (20) repose par son bord (21), et la pièce d'insertion (20) peut appuyer sur un poussoir (4) de la plaque supérieure (3), et dans une position inférieure du moyen (5), un espace supplémentaire est libéré de telle sorte que le bord (21) de la pièce d'insertion (20) peut être injecté de tous côtés.

6. Moule d'injection selon la revendication 5, **caractérisé en ce que** le moyen (5) est un poussoir sous forme de manchon cylindrique (8) qui repose mobile dans la plaque inférieure (2).

7. Moule d'injection selon la revendication 6, **caractérisé en ce que** des tiges (10) sont formées sur l'extrémité supérieure (9) du manchon cylindrique (8), dont les extrémités forment des plaquettes de pose (11), sachant que chaque plaquette de pose (11) voisine est distancée pour former des traverses en plastique.

8. Moule d'injection selon la revendication 5, **caractérisé en ce qu'**une cavité (12) est formée dans la plaque inférieure (2), sur le bord supérieur de chaque cavité de réception (7), qui détermine la hauteur, la largeur et la forme du col (22) à former sur le bord (21) de la pièce d'insertion (20).

9. Moule d'injection selon la revendication 5, **caractérisé en ce qu'**un poussoir (4) est présent dans la plaque supérieure (2), sachant que le bord (21) de la pièce d'insertion (20) est maintenu pincé entre les deux poussoirs (4, 5) pendant que la première injection a lieu.

10. Moule d'injection selon la revendication 6, **caractérisé en ce que** le trajet de déplacement du poussoir (4) dans la plaque supérieure (3) correspond à l'épaisseur de la couche de plastique du col (22) sur le bord (21) de la pièce d'insertion.

11. Moule d'injection selon la revendication 5, **caractérisé en ce qu'**au moins une buse d'injection est prévue pour chaque plastique différent à employer pour former le col (22).
